(19) Europäisches Patentamt
European Patent Office
Office européen des brevets

(11) **EP 4 159 398 B1**

(12) **EUROPÄISCHE PATENTSCHRIFT**

(45) Veröffentlichungstag und Bekanntmachung des Hinweises auf die Patenterteilung:
**15.10.2025   Patentblatt 2025/42**

(21) Anmeldenummer: **22197913.1**

(22) Anmeldetag: **27.09.2022**

(51) Internationale Patentklassifikation (IPC):
**B29B 17/02** (2006.01)        **B29B 17/00** (2006.01)

(52) Gemeinsame Patentklassifikation (CPC):
**B29B 17/02; B29B 17/0026;** B29B 2017/0224;
B29B 2017/0255; B29K 2067/003; B29L 2007/008;
Y02W 30/62

(54) **BIAXIAL ORIENTIERTE POLYESTERFOLIE, DIE EIN POST CONSUMER ODER POST INDUSTRIAL REGENERAT AUS EINER BESCHICHTETEN POLYESTERFOLIE ENTHÄLT UND PROZESS ZUR HERSTELLUNG DER FOLIE UND DES REGENERATES**

BIAXIALLY ORIENTED POLYESTER FILM CONTAINING POST-CONSUMER OR POST INDUSTRIAL REGENERATED FILM FROM COATED POLYESTER FILM AND PROCESS FOR PRODUCING THE FILM AND THE REGENERATED FILM

FILM POLYESTER ORIENTE BIAXIALEMENT CONTENANT UN POST-CONSUM OU POST-EXTRUSION A PARTIR D'UN FILM POLYESTER REVETU ET PROCEDE DE PRODUCTION DU FILM ET DE LA REGENERATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **30.09.2021   DE 102021125368**

(43) Veröffentlichungstag der Anmeldung:
**05.04.2023   Patentblatt 2023/14**

(73) Patentinhaber: **Mitsubishi Polyester Film GmbH**
**65203 Wiesbaden (DE)**

(72) Erfinder:
• **Klein, Dagmar**
**55437 Ockenheim (DE)**
• **Kliesch, Holger**
**65462 Ginsheim (DE)**
• **Kurz, Rainer**
**65307 Bad Schwalbach (DE)**

(74) Vertreter: **Schweitzer, Klaus**
**Dr. Müller Patentanwälte**
**Mühlstraße 9A**
**65597 Hünfelden (DE)**

(56) Entgegenhaltungen:
EP-A1- 2 524 015        EP-B1- 2 524 015
WO-A1-94/13474        US-A1- 2018 079 878
US-B2- 9 636 845

## Beschreibung

Biaxial orientierte Polyesterfolie die mindestens ein post consumer oder post industrial Regenerat enthält, welches zu mindestens 10 Gew.-% aus einer beschichteten Polyesterfolie hergestellt wurde, sowie ein Verfahren zu ihrer Herstellung und insbesondere ein Verfahren zur Herstellung des genannten Regenerates. Ebenfalls beansprucht wird ein Regenerat bestehend aus min. 10 Gew.-% beschichteter Polyesterfolie (post consumer oder post industrial), welches nach dem erfindungsgemäßen Verfahren hergestellt wurde.

## Zusammenfassung

Die vorliegende Erfindung betrifft eine biaxial orientierte Polyesterfolie, die mindestens ein post consumer oder post industrial Regenerat enthält, welches zu mindestens 10 Gew.-% aus einer beschichteten Polyesterfolie hergestellt wurde. Bei der beschichteten Polyesterfolie handelt es sich in der Regel um silikonisierte Polyesterfolie, oder um Beschichtungen mit vernetzten oder teilvernetzten Komponenten wie "hard coats" oder ähnlichem. Die beschichtete Folie zur Herstellung des Regenerates hat dabei mindestens einen zusätzlichen Prozessschritt, der sich von der eigentlichen Polyesterfolienherstellung und Konfektionierung unterscheidet erlebt, bzw. die Folie ist in ihrer bestimmungsgemäßen Endanwendung verwendet worden und fiel dort als "Abfall" an. Es handelt sich dabei also um post-consumer oder post-industrial Regenerat. Diese Folie wird nach der bestimmungsgemäßen Verwendung gesammelt und anschließend nach der Abtrennung von eventuell vorhandenen nicht Polyesterfolienanteilen mechanisch rezykliert. Diese Rezyklierung umfasst das Häckseln der Folie, das anschließende Aufschmelzen der Folie in einem Extruder und das abschließende Granulieren der Schmelzestränge. Bei dem verwendeten Extruder handelt es sich dabei um einen Mehrschneckenextruder. Das resultierende Granulat hat durch die Verwendung des Mehrschneckenextruders eine wesentlich bessere Qualität hinsichtlich Einschlüssen als bei Verwendung eines industrieüblichen Einschneckenextruders. Dies führt dann beim Wiedereinsatz in der Polyesterfolienherstellung zu einem deutlich geringeren Stippenniveau und zu einer wesentlich verbesserten Filterstandzeit gegenüber der Verwendung eines Rezyklates aus dem gleichen Ausgangsmaterial welches unter Verwendung eines Einschneckenextruders hergestellt wurde.

## Beschreibung

Die zunehmende Bedeutung von Recycling im Rahmen der Circular Economy Diskussion verlangt auch in der PET-Folienherstellungen nach Lösungen, die den Einsatz von rezykliertem Material erlauben. Im Bereich der PET Flaschen ist dies bereits seit 20 Jahren industrielle Realität. Die gebrauchten PET Flaschen werden gesammelt und geschreddert, andere Kunststoffe (Deckel, Labels etc.) werden anschließend über verschiedene Verfahren abgetrennt (unter anderem über Float-Sink-Verfahren) und die Flakes werden zudem mittels einer alkalischen Waschung oberflächlich gereinigt und dann in einem Extruder aufgeschmolzen und dann wieder granuliert. Abschließend erfolgt entweder noch in der Schmelze eine FlüssigphasenAufkondensation oder eine anschließende Aufkondensation in einem Taumeltrockner, um die durch den Prozess gesunkene Kettenlänge wieder auf einen SV von mindestens 1000 zu bringen, der für die Herstellung neuer Flaschen gefordert ist. Bei den verwendeten Extrudern handelt es sich üblicherweise um Einschneckenextruder (z.B. vom Marktführer Erema, oder von NGR und anderen), da diese günstiger in der Anschaffung und robuster und billiger im Betrieb sind, als Zwei- oder gar Mehrschneckenextruder. Zwei- und Mehrschneckenextruder kommen in der Regel nur dann zum Einsatz, wenn das Einmischen (Compoundieren) von anderen Stoffen (wie z.B. Weißpigmenten in Masterbatchen) gewünscht ist, oder aber im Anschluss an das Aufschmelzen im Einschneckenextruder in der FlüssigphasenAufkondensation.

Polyesterfolien kommen häufig in Laminaten (die vor einem mechanischen Recycling aufwendig getrennt werden müssten) oder in Langzeitanwendungen (z.B. in Elektronikbauteilen, wobei der Polyesteranteil hier gering ist, so dass sich das Recycling hier derzeit noch nicht lohnt) zum Einsatz. Diese können aktuell am Ende ihres Lebenszyklusses noch nicht wirtschaftlich wiederverwendet werden. Anders sieht dies bei Polyesterfolien aus, die als "Prozessfolien" eingesetzt werden. Beispiele hierfür sind Folien, auf die andere Folien oder Lacke beschichtet werden und diese anderen Folien bzw. die Lacke dann von der Polyesterfolie abgezogen werden (z.B. PU casting) bzw. auf eine andere Oberfläche übertragen werden (z.B. Lacke in der Möbelindustrie). Eine besonders große Anwendung dieser Art sind silikonisierte Folien, die als Liner für alle Arten von Labels zum Einsatz kommen. Die aufgebrachten Labels werden zumeist maschinell von der Folie abgezogen und auf das Zielsubstrat (z.B. Getränke oder Detergentienflaschen) übertragen. Zurück bleibt eine weitgehend saubere Polyesterfolie, die eine Silikonschicht aufweist und mit geringen Mengen von Kleberresten und gegebenenfalls einzelnen, nicht übertragene Labels kontaminiert ist.

Ein Verfahren für das Recycling einer solchen Folie ist in EP2524015 beschrieben und wurde von der Anmelderin (MITSUBISHI POLYESTER FILM INC [US]) auch für eine Zeit kommerziell im industriellen Maßstab genutzt.

Nachteile der wie in Verwendung der wie in EP2524015 beschrieben hergestellten Rohstoffe in der Folienproduktion, ist aber die relativ kurze Filterstandzeit an der Folienproduktionsanlage, die auf bis zu nur noch 10 Gew.-% der üblichen Filterstandzeit (bei Verwendung von post consumer regeneratfreien Rohstoffen) sinkt. Die Senkung der Filterstandzeit ist dabei abhängig von der Gesamtmenge an silikonisierter Folie im eingesetzten Regenerat (bzw. durchgerechnet je nach Anteil an rezyklierter silikonisierter Folie in der neu hergestellten Folie), die in die neue Folie eingebracht wird. Ebenfalls nachteilig ist der deutlich steigende Anteil von Einschlüssen (Stippen) in der Folie, der die Wahrscheinlichkeit von Folienabrissen erhöht und in den Endanwendungen der Folie stören können. Kürzere Filterstandzeiten und mehr Abrisse verringern die Wirtschaftlichkeit der Folienproduktion deutlich.

Ähnliche Probleme ergaben sich auch beim Wiedereinsatz von Regenerat, welches aus Prozessfolien hergestellt wurde, auf die zuvor vernetzte bzw. teilvernetzbare Lacke aufgetragen und abgezogen wurden.

Die Aufgabe der vorliegenden Erfindung war es daher einen Rohstoff und einen Prozess zur Herstellung des selben zur Verfügung zu stellen, der mindestens teilweise aus silikonisierten Folien, oder Folien mit vernetzten oder teilvernetzen Schichten besteht, welcher die genannten Nachteile beim Druckanstieg nicht aufweist und weiterhin ist es Aufgabe der vorliegenden Erfindung eine Polyesterfolie die diesen Rohstoff enthält bereitzustellen, die sich mit guter Wirtschaftlichkeit herstellen lässt und ein akzeptables Niveau an Einschlüssen aufweist.

Gelöst wird diese Aufgabe durch ein Verfahren, in dem die zu rezyklierende beschichtete Polyesterfolie in einem Zwei- oder Mehrschneckenextruder aufgeschmolzen wird, die Schmelze filtriert wird, und anschließen die Schmelze in Strängen abgekühlt und granuliert wird. Anschließend wird eine biaxial orientierte Polyesterfolie produziert, die ganz oder teilweise aus diesem Rohstoff besteht.

Wobei:

1. Bei den erfindungsgemäßen Extrudern zum Aufschmelzen des Polyesters handelt es sich um Zwei- oder Mehrschneckenextruder

2. In dem Extruder zugeführten Massenstrom sind mindestens 10 Gew.-% einer beschichteten Polyesterfolie enthalten

3. Die Schmelze wird vor der Granulierung filtriert

4. Es wird eine biaxial gestreckte Folie hergestellt, die zu mindestens 10 Gew.-% aus dem vorgenannten Polyesterrohstoff besteht

Bei den im erfindungsgemäßen Verfahren eingesetzten Extrudern handelt es sich ausschließlich um Zwei- oder Mehrschneckenextruder. Solche Extruder werden kommerziell u.a. von Japan Steel Works hergestellt.

Ungeeignet im Sinn der Erfindung ist die Verwendung von Einschneckenextrudern, da diese überraschenderweise zu sehr deutlich schlechteren Ergebnissen im Prozess der Folienherstellung führen. Wenn Einschneckenextruder (wie die handelsüblichen Erema Extruder zur Aufarbeitung von Folienverschnitt oder Flaschenhäcksel) verwendet werden, dann verringert sich die Filterstandzeit an der Polyesterfolienproduktionsanlage so deutlich, dass ein kommerzieller Betrieb über längere Zeit nicht mehr möglich ist, dies gilt merklich ab dann, wenn min. 10 Gew.-% eines Rohstoffs verwendet wird, der aus mindestens 10 Gewichtsprozent beschichteten Polyesterfolienabfällen hergestellt wurde. Es kommt zudem, zu einem über die Produktionszeit deutlich steigendem Anteil an Einschlüssen und zu einer nicht tolerierbaren Zahl von Folienabrissen. Dies ist insbesondere überraschend, da Einschneckenextruder in der Polyesterfolienindustrie der am weitesten verbreitete Standard für die Aufarbeitung von im Folienprozess anfallenden Abfällen sind. Auch die Prozessabfälle (Randstreifen, An- und Abfahrrollen, Material aus Folienabrissen), die in der Herstellung von silikonisierten Folien selbst anfallen, sind durchaus mit guter Qualität auf Einschneckenextrudern verarbeitbar und können wieder eingesetzt werden. Daher war der deutliche Vorteil, den Zweischneckenextruder bei der Verarbeitung von post consumer Abfällen von silikonisierter Folie bieten, im hohen Maße unerwartet.

Zweischneckenextruder sind dabei bevorzugt gegenüber Mehrschneckenextrudern, da Letztere teurer in der Anschaffung und im Betrieb sind und keinen Vorteil in der erfindungsgemäßen Anwendung gegenüber Zweischneckenextrudern bieten. Weniger bevorzugt im Sinne der Erfindung sind Kombinationen aus einem initialen Einschneckenextruder zum Aufschmelzen der Polyesterabfälle, an den sich ein Zwei- oder Mehrschneckenextruder anschließt, der üblicherweise als Austragseinheit eines Aggregates zur Erhöhung der Schmelzeviskosität dient. Eine solche Kombination liefert zwar eine bessere Verarbeitbarkeit des produzierten Hegenerats gegenüber einem Einschneckenextruder allein, ist aber schlechter, als Zwei- oder Mehrschneckenextruder allein.

Der Einsatz von Zweischneckenextrudern reduzierte zudem das Stippenniveau in der Folie gegenüber dem Einsatz von Einschneckenextrudern. Störende Stippen sind in der Regel Einschlüsse mit einer Gesamtdefektgröße von über 20 $\mu$m. Die Anzahl solcher Einschlüsse hängt von der Art der Filtration, der Verweilzeit der Schmelze im Extrusionssystem und der Art der verwendeten Rohstoffe ab. Als Standard kann im Sinn der Erfindung eine Folie gelten, die ohne post consumer Regenerat hergestellt wird. Bei der Verwendung von post consumer Regenerat, welches mittels eines Einschneckenextruders hergestellt wurde, stieg die Fundrate um einen Faktor 1,3 bei nur 10 % Anteil and post consumer Rezyklat aus silikonisierter Folie (bezogen auf das Gesamtgewicht der Folie). Wurde stattdessen ein post consumer Regenerat aus dem gleichen Ausgangsmaterial in der gleichen Menge eingesetzt, welches mittels eines Zweischneckenextruders hergestellt wurde, so wurden nur ein Anstieg um den Faktor 1,05 beobachtet. Die Stippen werden dabei im polarisiertem Licht mit dem Auge gesucht und markiert. Strukturen unter 20 μm sind visuell so gut wie nicht detektierbar, so dass man davon ausgehen kann, dass nahezu alle gefundenen Defekte etwa 20 μm Größe aufwärts als Flächen-ausdehnung aufweisen. Zu Sicherheit werden die markierten Fehler nochmals im Lichtmikroskop vermessen und die Defekte mit einer Länge von 20 μm in einer Raumrichtung als Stippe gezählt. Es müssen immer min. 3 Stücke a 5 qm Folie untersucht werden.

Bei den zu rezyklierenden beschichteten Folien handelt es sich um Folien, die nach ihrem bestimmungsgemäßen Gebrauch beim Endverwender als Abfall anfallen. Dieser Folienabfall muss vor der Zuführung zum Extruder von eventuell vorhandenem Fremdmaterial (sonstiger Abfall, wie Getränkedosen, Papier etc.) befreit werden und wird idealerweise beim Endverwender sortenrein gesammelt. Die Folie muss vor der Zuführung zum Extruder gehäckselt werden.

Bei den beschichteten Folien handelt es sich dabei um silikonisierte Folien das bedeutet, um Folien, die eine Silikonschicht aufweisen. Diese Silikonschicht ist aus Poly(organo)siloxanen aufgebaut, die aus einzelnen Siloxaneinheiten aufgebaut sind. Die Zusammensetzung der Siloxaneinheit ergibt sich unter Berücksichtigung der Tatsache, dass jedes Sauerstoffatom als Brückenglied zwischen je zwei Siliciumatomen liegt: $R_nSiO_{(4-n)/2}$ (n=0, 1, 2, 3), d. h., dass eine Siloxaneinheit ein bis vier weitere Substituenten aufweisen kann, je nach Anzahl der frei gebliebenen Valenzen am Sauerstoff. Siloxaneinheiten können also mono-, di-, tri- und tetrafunktionell sein. In symbolischer Schreibweise stellt man dies durch die Buchstaben M (mono), D (di), T (tri) und Q (quatro) dar: $[M]=R_3SiO_{1/2}$, $[D]=R_2SiO_{2/2}$ und $[T]=RSiO_{3/2}$.

Wie bei den organischen Polymeren basiert die Vielzahl der möglichen Verbindungen darauf, dass verschiedene Siloxaneinheiten im Molekül miteinander verknüpft werden können. Angelehnt an die Systematik der organischen Polymere kann man folgende Gruppen unterscheiden:

- Cyclische Polysiloxane sind ringförmig aus difunktionellen Siloxaneinheiten aufgebaut. Bauform $[D_n]$.

- Lineare Polysiloxane mit der Bauform $[MD_nM]$ bzw. $R_3SiO[R_2SiO]_nSiR_3$ (Bsp. Poly(dimethylsiloxan))

- Verzweigte Polysiloxane die als verzweigende Elemente trifunktionelle oder tetrafunktionelle Siloxaneinheiten aufweisen. Bauform $[M_nD_mT_n]$. Die Verzweigungsstelle(n) ist/sind dabei entweder in eine Kette oder einen Ring eingebaut.

- Vernetzte Polysiloxane in dieser Gruppe sind ketten- oder ringförmige Moleküle mit Hilfe von tri- und tetrafunktionellen Siloxaneinheiten zu planaren oder dreidimensionalen Netzwerken verknüpft. Für den Aufbau hochmolekularer Silikone sind Kettenbildung und Vernetzung die dominierenden Prinzipien.

Die Polyesterfolien, die in dem erfindungsgemäßen Verfahren zur Rezyklierung eingesetzt werden, können jegliche Art von Silikonbeschichtung aufweisen. Beispielhaft wird an dieser Stelle auf US 5672428 A verwiesen. In diesem Dokument werden silikonisierte Folien beschrieben, die gemäß der vorliegenden Erfindung verwendet werden können. Die dort beschriebenen silikonisierten Folien sind Polyesterfolien, die mit einer Silikonbeschichtung versehen sind. Die Beschichtungszusammensetzung der Silikonbeschichtung umfasst ein Vinylgruppen enthaltendes Alkylvinylpolysiloxan, einen Katalysator, der ein Platinkomplex oder ein Zinnkomplex ist, ein Glycidoxysilan und ein Alkylhydrogenpolysiloxan, dass 1,5 bis 2 Mol-% Wasserstoff enthält.

Weniger bevorzugt sind andere beschichtete Polyesterfolien wie z.B. die eingangs beschriebenen Lacktransferfolien, die noch Reste der transferierten Lacke enthalten.

Je nach Art des verwendeten Lacks und verbliebener Menge kann es bei der Folienproduktion zu einer unerwünschten Geruchsentwicklung oder zu Verfärbungen der Folie kommen. Daher sind solche anderen beschichteten Polyesterfolien in einer bevorzugten Ausführungsform zu weniger als 20 Gew.-% und bevorzugt zu weniger als 10 Gew.-% und idealerweise gar nicht im Eingangsmaterial vorhanden.

Die Fraktion der silikonisierten Folien weist dabei erfindungsgemäß im Gesamtflächenmittel eine Silikon-schichtdicke von < 0,5 μm, bevorzugt von < 0,4 μm, besonders bevorzugt von < 250 nm und idealerweise von < 180 nm auf. Je höher die mittlere Schichtdicke des Silikons ist, umso höher ist später die Anzahl von Einschlüssen in der regenerat-haltigen Folie und umso geringer ist die Filterstandzeit bei der Herstellung derselben. D.h. bevorzugt im Sinne der Erfindung ist es, wenn die silikonisierte Folie überwiegend eine solche ist, bei der die Silikonisierung während der Folienherstellung (in-line) aufgebracht wurde, da hier üblicherweise die Silikonschichtdicken unterhalb von 200 nm liegen. Solche Produkte sind beispielsweise unter dem Markennamen Hostaphan RN 23 2SLK von Mitsubishi Polyester Film GmbH Deutschland, aber auch von Siliconature (Italien) erhältlich. Wenn off-line silikonisierte Folienabfälle (Silikonschichten von üblicherweise 0,5 - 3 μm) mit wiederverwertet werden sollen, so ist in dieser bevorzugten Ausführungsform durch Abmischung mit inline silikonisierten Folienabfällen dafür zu sorgen, dass die mittlere Silikonschichtdicke im Einsatzmaterial die genannten Grenzen nicht überschreitet. Die Siliconschichtdicke des jeweiligen Liners (Bezeichnung für silikonisierte Folie als Träger von Etiketten/Labeln) kann für alle im Abfall enthaltenen Linertypen mittels bekannter Verfahren (z.B. Anschnitt der Folie und Messung der Schichtdicke im Elektronenmikroskop oder aber auch mittels optischer Verfahren wie Ellipsometrie) bestimmt werden. Nach der Bestimmung der Schichtdicke für die im Abfall enthaltenen Linertypen, müssen deren Verhältnisse im Prozess so eingestellt werden, dass wie oben erwähnt die bevorzugten Bereiche der mittleren Schichtdicken nicht überschritten werden.

Im Rahmen der circular economy Diskussion ist der "cradle to cradle" Ansatz der am meisten bevorzugte. D.h. ein Produkt wird am Ende seines Lebenszyklusses regeneriert (rezykliert) und dieses Regenerat wird eingesetzt, um erneut dasselbe Produkt herzustellen. So wird eine echte Kreislaufwirtschaft realisiert. Daher ist es das Ziel möglichst viel "post consumer" Regenerat aus silikonisierter Folie mit einem möglichst hohen Anteil derselben bei der Herstellung neuer silikonisierter Folien einzusetzen.

Der Anteil an silikonisierter Folie im Eingangsmaterial für die Rezyklierung liegt daher bei mindestens 10 Gew.-%, bevorzugt bei mindestens 50 Gew.-%, besonders bevorzugt bei mindestens 90 Gew.-% und idealerweise bei > 99 Gew.-%.

Neben der silikonisierten Folie können im Eingangsmaterial andere post consumer /post industrial Polyesterabfälle enthalten sein, wie zum Beispiel andere Polyesterfolienabfälle (beschichtet oder unbeschichtet), oder aber Häcksel aus Polyesterflaschen und Trays. Da diese dann aber nicht in ihre Ursprungsanwendung zurückgeführt werden, sind sie in den oben genannten Grenzen weniger bevorzugt im Sinne der Erfindung.

Ebenso nicht bevorzugt ist die Zugabe von "virgin" Polyestern oder Prozessabfällen aus der Polyesterfolienherstellung, die noch nicht als Produkt bei einem privaten oder industriellen Endkunden benutzt wurden. Solche Polyester sind im Eingangsmaterial zu weniger als 15 Gew.-% und bevorzugt zu weniger als 5 Gew.-% und idealerweise gar nicht vorhanden.

Neben anderen Polyesterabfällen sind zumeist noch einzelne Labels (Etiketten) auf der Folie vorhanden, die im Endanwenderprozess nicht ordnungsgemäß auf das Zielsubstrat übertragen wurden. Neben dem Labelmaterial selbst bringen diese Druckfarbe und Klebstoffe in die Schmelze ein. Diese können zu Verfärbungen in der Schmelze und in der später hergestellten Folie führen, oder aber die Filter bei der Regeneratherstellung oder bei der Folienherstellung blockieren. Zudem besteht ein erhebliches Risiko von intolerablen Geruchsbelästigungen bei der Herstellung der Regenerate und insbesondere später bei der Herstellung der Folie. Daher müssen Reste von Labeln vor der Regeneratherstellung entfernt werden. Dies kann z.B. durch manuelles Sortieren von betroffenen Folienbahnen oder durch automatisiertes Sortieren der Häcksel auf einem Förderband mittels Farberkennung und Abblasen des betroffenen Häcksels erfolgen. Für die folgenden Materialien gelten daher die folgenden Grenzen, egal ob diese als Restetiketten oder aus einer anderen Quelle in das Häcksel gelangt sind.

Papier darf in Häckseln, welches in den Extruder eingeführt wird, zu maximal 1 Gew.-%, bevorzugt zu maximal 0,3 Gew.-% und idealerweise zu weniger als 0,05 Gew.-% enthalten sein. Da Papier im Extruder verbrennt und die Schmelzefilter verstopft, führt dies zu schwarzen Einschlüssen, die in der Folge zu Folienabrissen führen können. Werden die genannten Bereiche überschritten, ist eine wirtschaftliche Produktion von Regenerat und Folie nicht mehr möglich.

Bedruckte Polyester, die zu mehr als 70 Gew.-% aus PET bestehen (die anderen maximal 30 Gew.-% können auf andere Monomere wie Isophthalsäure, Cyclohexandimethanol, Diethylenglykol, Naphthalindicarbonsäure, Propandiol, Butandiol etc. entfallen) sind zu maximal 7 Gew.-%, bevorzugt zu maximal 4 Gew.-%, besonders bevorzugt zu maximal 1 Gew.-% und idealerweise unter 0,5 Gew.-% im Häcksel enthalten.

Polypropylen ist zu maximal 2 Gew.-%, bevorzugt zu maximal 1 Gew.-%, besonders bevorzugt zu maximal 0,5 Gew.-% und idealerweise zu weniger als 0,1 Gew.-% in dem Häcksel enthalten. Polypropylen blockiert in der Regel die Filter nicht im hohen Maße, führt aber zu einer erheblichen Geruchsbelästigung und zu einer deutlichen unerwünschten Eintrübung der später aus den erzeugten Regeneraten hergestellten Folie.

Alle anderen eventuell vorhandenen Polymere sind zu maximal 0,8 Gew.-%, bevorzugt zu maximal zu maximal 0,1 Gew.-% und idealerweise zu weniger als 0,05 Gew.-% im Häcksel enthalten.

Die Schmelze wird vor der abschließenden Granulierung gefiltert. Üblicherweise werden hierzu Metallgewebefilter, oder Sintermetallfilter verwendet. Es können aber auch selbstreinigende Filter, wie z.B. von Gneuß erhältlich, verwendet werden. Die angegebene Nenn-Porenweite der letzten Filtrationsstufe liegt dabei bei kleiner/gleich 100 $\mu$m, bevorzugt bei kleiner gleich 80 $\mu$m, besonders bevorzugt bei kleiner 50 $\mu$m und idealerweise bei kleiner/gleich 30 $\mu$m. Vor dieser letzten Stufe kann ein weiterer Filter (größere Porenweite als 80 $\mu$m) platziert werden, was insbesondere dann von Vorteil ist, wenn das Häcksel noch Papier oberhalb des idealen Bereiches enthält. Je geringer die Porenweite der letzten Filtrationsstufe, desto größer ist die Filterstandzeit in der Folienproduktionsanlage. Da Filterwechsel an der Folienproduktionsanlage wesentlich teurer sind, als die am Extruder für die Regeneratherstellung, ist dies von Vorteil. Je niedriger die Porenweite am Regeneratextruder ist, desto geringer ist allerdings auch die Filterstandzeit an diesem. Die niedrigen Porenweiten können daher in der Regel dann verwendet werden, wenn die vorher genannten Verunreinigungen des Häcksels mit Fremdmaterial auf den genannt niedrigen Niveaus sind.

Unter Filterstandzeit wird im Rahmen dieser Erfindung die Zeitspanne verstanden, welche ein Filter, vom Zeitpunkt des Einbaus an bis zum Überschreiten eines maximal zulässigen Druckwertes, zu Produktionszwecken betrieben werden kann. Die absolute Höhe des maximalen Druckwertes ist Anlagen- und Filterspezifisch, so dass auch die Filterstandzeit abhängig vom verwendeten System variabel ist (pro gewähltes System jedoch reproduzierbar). Filtersysteme die hohe Druckdifferenzen vor und nach dem Filtern ermöglichen, führen zu längeren Filterstandzeiten, sind jedoch wegen der höheren absoluten Drücke auch aufwendiger zu realisieren. In der Regel wird versucht einen Kompromiss zu finden aus möglichst langen Filterstandzeiten, und gleichzeitig hohe Absolutdrücke zu vermeiden, um den technischen Aufwand gering zu halten.

Die Filterstandzeit hängt im Wesentlichen vom Verschmutzungsgrad der Rohstoffe durch Fremdmaterial ab. Insbesondere Post-Consumer Regenerat führt in der Regel zu einer deutlichen Abnahme der Filterstandzeit von nur noch wenigen Tage, was die Folienproduktion wirtschaftlich unrentabel macht.

Das Rezyklat kann entweder noch in der Schmelze (Flüssigphasenaufkondensation) oder nach der Granulierung in einem Taumeltrockner aufkondensiert werden. Die Flüssigphasenaufkondensation ist dabei bevorzugt, da sie im gleichen Prozessschritt mit der ersten Extrusion erfolgt und flüchtige Stoffe besser aus der Schmelze entfernt, als ein Taumeltrockner aus dem festen Granulat. Hierdurch kann die Geruchsbelästigung in der Folienherstellung deutlich reduziert werden. Die Erhöhung der Viskosität selbst ist erst ab einem Anteil von mehr als 30 Gew.-% post consumer Regenerat bei der Folienherstellung von Vorteil, da vorher die Viskosität über die anderen verwendeten Rohstoffe leichter eingestellt werden kann.

Da das Regenerat weitgehend transparent ist, wenn nicht in einem Taumeltrockner aufkonsdensiert wurde und weitgehend klare silikonisierte Folien das Eingangsmaterial waren, hat es sich als günstig erwiesen, wenn das Granulat vor dem Einsatz mittels einer optischen (oder Röntgen) automatisierten Kontrolle inspiziert wird und Granulatkörner mit großen Einschlüssen (> 30 $\mu$m) aussortiert werden (z.B. bei Sikora AG, Bremen, Germany).

Anschließend kann dieses Granulat wieder bei der Herstellung einer biaxial orientierten Polyesterfolie, oder weniger bevorzugt für andere Polyesteranwendungen, eingesetzt werden.

In einer bevorzugten Ausführungsform haben die eingesetzten post-consumer Regenerate eine Filtertestbewertung von akzeptabel oder besser.

Bei der erfindungsgemäßen Folienherstellung werden mindestens 10 Gew.-%, bevorzugt mindestens 25 Gew.-% und idealerweise mindestens 31 Gew.-% des erfindungsgemäßen Regenerates bezogen auf das Gesamtgewicht der Folie zugegeben. Die Folie kann aus 100 Gew.-% des Regenerates hergestellt werden, aber Dosierungen oberhalb von 50 Gew.-% sind weniger bevorzugt, da es dann auch bei Verwendung eines Zweischneckenextruders zu einer merklich verminderten Filterstandzeit in der Folienherstellung kommt. Außerdem ist die bevorzugte Zielanwendung der Folie erneut eine silikonisierte Folie als Liner für Labels. Das diese dann ja auch nach dem hier beschriebenen Verfahren nach ihrer Nutzung rezykliert werden soll, kumuliert bei Regeneratanteilen oberhalb von 50 Gew.-% das auf der Folie verbleibende Silikon im Prozess, was dann zu sinkenden Filterstandzeiten und mehr Einschlüssen in den resultierenden Folien führt.

Wenn dennoch post consumer Regeneratanteile von über 50 Gew.-% erreicht werden sollen, hat es sich als günstig erwiesen, wenn zusätzlich ein post consumer Recyklat aus nicht beschichteten Polyesterfolien verwendet wird, bzw. bevorzugt ein Regenerat aus Polyesterflaschen, bzw. besonders bevorzugt ein chemisch rezyklierter Polyester aus post consumer Polyesterabfällen verwendet wird, um die Lücke zum Zielregeneratanteil zu schließen.

Die sonstigen Polymerrohstoffe, die der Folie zugegen werden, sind zu mindestens 95 Gew.-%, besonders bevorzugt zu mindestens 98 Gew.-% thermoplastische Polyester. Bevorzugt ist dabei ein Polyester aus Ethylenglykol und Terephthalsäure (= Polyethylenterephthalat, PET). Weniger geeignet sind Polyester, die Naphthalin-2,6-dicarbonsäure als Wiederholungseinheit enthalten, da diese zu einem höheren Preis der Folie führen, ohne dass dies weitere Vorteile in der Hauptzielanwendung Liner für Labels hätte. Der Polyester kann weitere Monomere, wie Isophthalsäure oder Cyclohexandimethanol oder Ethylenglykol enthalten. Bezogen auf das Gesamtgewicht der Folie liegt der Anteil von anderen Monomeren außer Ethylenglykol und Terephthalsäure bei < 7 Gew.-%, da sonst die mechanische Stabilität der Folie geringer wird, was in den meisten Zielanwendungen unerwünscht ist.

Andere Polymere außer den thermoplastischen Polyestern werden zu weniger als 5 Gew.-%, bevorzugt zu weniger als 1 Gew.-% und idealerweise gar nicht zugegeben

Die Folie kann neben den erwähnten Polymeren, Partikel, wie z.B. Calciumcarbonat, Siliziumdioxid oder Aluminiumtrioxid, enthalten. Solche Partikel werden zur Verbesserung des Schlupfverhaltens oder zur Mattierung zugegeben und sind üblicherweise zu weniger als 2, bevorzugt zu weniger als 1 und idealweise zu weniger als 0,5 Gew.-% in der Folie enthalten.

Die Folie kann in einer weniger bevorzugten Ausführungsform weißfärbende Partikel wie Titandioxid und Bariumsulfat enthalten, diese sind zu maximal 19 Gew.-% in der Folie enthalten. Sind weißfärbenden Partikel enthalten, so beziehen sich die zuvor gemachten Angaben zu den Polymergehalten nur auf den Polymeranteil der Folie und lassen das inerte Weißpigment unberücksichtigt. Weiße Polyesterfolien sind weniger bevorzugt im Sinne der Erfindung, da sie selbst aktuell nicht wiederverwertet werden können, da sich ein separates Sammeln zur Zeit aufgrund der kleinen Gesamtmenge nicht lohnt und sie nicht mit den transparenten beschichteten Folien gemischt werden können, da dann die Farbe der resultierenden Folie bei schwankenden Gehalten an weißen Folien im Eingangsmaterial nicht einstellbar ist.

Die Folie kann weitere Zuschlagstoffe, wie z.B. Radikalfänger (z.B. Irganox 1010) oder Farbstoffe (bevorzugt blaue Farbstoffe zur Kompensation des Gelbanteils) enthalten. Der Anteil solcher weiterer Zuschlagstoffe, liegt bei < 0,5 Gew.-% und bevorzugt bei < 0,3 Gew.-%.

Die Folie kann ein oder mehrschichtig sein. In einer bevorzugten Ausführungsform ist die Folie mindestens dreischichtig. In einer bevorzugten mindestens 3 schichtigen Ausführungsform wird das post consumer Regenerat nur einer oder mehreren innen liegenden Schichten zugegeben, während die beiden außenliegenden Schichten aus virgin Polymer hergestellt werden. Dies hat den Vorteil, dass eventuell vorhandene Einschlüsse und Verunreinigungen im post consumer Regenerat sich weniger stark auf die Folienoberfläche auswirken und so in der Endanwendung weniger stören.

Die Gesamtfoliendicke beträgt mind. 12 $\mu$m und bevorzugt mindestens 15 $\mu$m. Ist die Folie dünner als 12 $\mu$m, führen Einschlüsse im post consumer Regenerat signifikant häufiger zu Folienabrissen, als dies bei dickeren Folien der Fall ist.

Für die Herstellung der erfindungsgemäßen Folie wird der SV-Wert des Polyesters zweckmäßigerweise so gewählt, dass die Folie einen SV-Wert von > 600, bevorzugt von > 650 und idealerweise von > 700 aufweist. Der SV-Wert der Folie ist dabei bevorzugt < 950 und besonders bevorzugt < 850. Liegt der SV-Wert unterhalb von 600, so wird die Folie schon bei der Herstellung so brüchig, dass es zu häufigen Abrissen kommt. Außerdem werden die weiter unten genannten mechanischen Festigkeiten bei geringerem SV-Wert nicht mehr sicher erreicht. Wenn die Folie einen höheren SV als 950 aufweist, dann wird das Polymer im Extruder so zäh, dass übermäßig hohe Ströme auftreten und es zu Druckschwankungen in der Extrusion kommt. Dies führt zu einer schlechten Laufsicherheit. Außerdem wird der Abrieb an den Extrusionswerkzeugen und an den Schneidwerkzeugen unverhältnismäßig hoch.

Diese Werte werden erreicht, in dem man das nach ihren Gewichtsanteilen gewichtete arithmetische Mittel aller Einsatzrohstoffe (inkl. des post consumer Regenerates) so einstellt, dass diese ca. 10 - 100 SV Einheiten über dem jeweiligen Zielwert für die Folie liegt. Da der Abbau des SV-Wertes während der Folienherstellung stark von der Anlage abhängt muss der für die jeweilige Folienanlage gültige Wert ermittelt werden.

Die erfindungsgemäße Folie weist weiterhin einen E-Modul in beiden Folienrichtungen (TD und MD) von größer 3000 N/mm$^2$ und bevorzugt von größer 3500 N/mm$^2$ und besonders bevorzugt (in mindestens einer Folienrichtung) von > 4000 N/mm$^2$ in Längs- und Querrichtung auf. Die F5-Werte (Kraft bei 5 % Dehnung) liegen bevorzugt in Längs- und Querrichtung bei über 80 N/mm$^2$ und besonders bevorzugt bei über 90 N/mm$^2$. Diese mechanischen Eigenschaften können durch Variation der Parameter der biaxialen Streckung der Folie im Rahmen der unten angegebenen Verfahrensbedingungen eingestellt und erhalten werden.

Folien mit den genannten mechanischen Eigenschaften werden in der Anwendung unter Zug nicht übermäßig verdehnt, bleiben gut führbar und weisen eine Steifigkeit auf, wie sie in der Endanwendung gewünscht ist.

In einer bevorzugten Ausführungsform wird die Folie in-line silikonisiert. Beispiele für in-line Silikonisierungen sind z.B. in US5672428 oder in EP3283295 gegeben.

Die trockene Schichtdicke des Silikons wird dabei so eingestellt, dass sie mindestens 60 bevorzugt mindestens 80 und idealerweise mindestens 90 nm dick ist. Ist die Schicht dünner als 60 nm haften die in der Labelindustrie üblicherweise verwendeten Kleber zu stark an der Folie und das Etikett lässt sich nicht gut abziehen. Die Schichtdicke liegt bei < 180 nm und bevorzugt bei < 170 nm. Ist die Schichtdicke größer als 180 nm kommt es vermehrt zu den bereits eingangs beschriebenen Problemen bei der Regenerierung und beim Wiedereinsatz des post consumer Regenerates.

**Verfahren zur Herstellung der Folie**

Die Polyesterpolymere der einzelnen Schichten werden als Regenerate wie das erfindungsgemäße post consumer Regenerat erhalten bzw. durch Polykondensation hergestellt, entweder ausgehend von Dicarbonsäuren und Diol oder - wenn auch weniger bevorzugt - ausgehend von den Estern der Dicarbonsäuren, vorzugsweise den Dimethylestern, und Diol. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 700 sein muss und bevorzugt größer als 750 ist. Diese Werte werden zweckmäßig verwendet, um die oben beschriebenen SV-Werte der Folie zu erreichen. Ist der SV-Wert zu gering wird die Folie brüchig, ist er zu hoch, steigen die Streckkräfte im Prozess stark an und eine wirtschaftliche Herstellung ist damit deutlich verschlechtert.

Zunächst wird der Polyester der einzelnen Schichten in Extrudern komprimiert und verflüssigt. In einer bevorzugten Ausführungsform liegen die Schmelzetemperaturen (Temperatur gemessen in der Schmelze am Extruderausgang) zwischen 290°C bis 300°C. Bei Temperaturen über 300°C steigt die Gelbzahl, bei Temperaturen unterhalb von 290°C steigt das Risiko von unaufgeschmolzenen Polymeranteilen, die zu unerwünschten Oberflächenerhebungen führen können. Diese Temperatur wird über das Durchsatz -zu Umdrehungsverhältnis des Extruders eingestellt, bzw. über die Temperaturen der Extruderheizung. Diese jeweiligen Verhältnisse und Temperaturen sind vom eingesetzten Extrudertyp abhängig und vom Fachmann mit Hilfe der genannten Parameter einzustellen. Die Schmelze wird vor der Düse über einen Sintermetall- oder Metallfließfiler filtriert, die Nennporengröße des Filters ist dabei < als 50 μm, bevorzugt kleiner als 35 μm und idealerweise < als 21 μm und bevorzugt > als 10 μm. Bei mehr als 50 μm kommt es zu zu vielen Einschlüssen in der Folie und zu einer erhöhten Zahl von Folienabrissen. Bei < 10 μm Porengröße kommt es zu einer zu kurzen Filterstandzeit. Dann werden die Schmelzen in einer Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen. Durch die Wahl geeigneter Streckparameter kann der Fachmann die mechanischen Eigenschaften der Folie, wie E-Modul, Steifigkeit und Dehnbarkeit einstellen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80°C bis 130°C (Aufheiztemperaturen 80°C bis 130°C) und in Querrichtung in einem Temperaturbereich von 90°C (Beginn der Streckung) bis 140°C (Ende der Streckung) durchgeführt. Das Längsstreckverhältnis liegt im Bereich von 2,5:1 bis 4,5:1, bevorzugt von 2,8:1 bis 4,0:1. Ein Streckverhältnis oberhalb von 4,5 führt zu einer deutlich verschlechterten Herstellbarkeit (Abrisse). Das Querstreckverhältnis liegt allgemein im Bereich von 2,5:1 bis 5,0:1, bevorzugt von 3,2:1 bis 4,0:1. Zum Erreichen der gewünschten Folieneigenschaften hat es sich als vorteilhaft erwiesen, wenn die Strecktemperatur (in MD und TD) unter 125°C und bevorzugt unter 118°C liegt. Vor der Querstreckung können eine oder beide Oberfläche(n) der Folie nach den an sich bekannten Verfahren In-Line beschichtet werden.

Bei der nachfolgenden Thermofixierung wird die Folie über eine Zeitdauer von etwa 0,1 s bis 10 s unter Spannung bei einer Temperatur von 150°C bis 250°C gehalten. Anschließend wird die Folie in üblicher Weise aufgewickelt.

**Analytik**

Zur Charakterisierung der Rohstoffe und der Folien wurden die folgenden Messwerte benutzt:

**SV-Wert (standard viscosity)**

Die Standardviskosität SV (DCE) wurde, angelehnt an DIN 53 726, bei einer Konzentration von 1 % in Dichloressigsäure in einem Ubbelohde Viskosimeter bei 25 C gemessen. Aus der relativen Viskosität ($\eta_{rel}$) wird der dimensionslose SV-Wert wie folgt ermittelt:

$$SV = (\eta_{rel} - 1) \times 1000$$

Folie bzw. Polymerrohstoffe wurden dazu in DCE gelöst. Der Anteil an Partikeln wurde mittels Aschebestimmung ermittelt und durch entsprechende Mehreinwaage korrigiert. D.h.:

$$Einwaage = (Einwagemenge\ laut\ Vorschrift) / ((100 - Partikelgehalt\ in\ Gew.\text{-}\%) / 100)$$

**Mechanische Eigenschaften**

Die mechanischen Eigenschaften wurden über Zugprüfung angelehnt an DIN EN ISO 527-1 und -3 (Probekörper Typ 2) an 100 mm x 15 mm großen Folienstreifen bestimmt.

**Filtertest**

Der Rohstoff wird in einem Einschneckenextruder bei einem Durchsatz von 2,4 kg/h aufgeschmolzen und bei 290°C durch einen Filter mit 10 μm Metallfaservlies (z.B. von Fa. Bekaert), mit einer Filterfläche von 50 cm$^2$ gepresst. Der Druck vor dem Filter wird während der gesamten Extrusionszeit permanent gemessen.

Die Filtrationsgüte wird anhand der Druckdifferenz zwischen 60 und 15 min Extrusionszeit bewertet.

Sehr gut < 2 bar Druckanstieg

Gut 2 - 8 bar Druckanstieg

Akzeptabel 9 - 20 bar Druckanstieg

Schlecht 21 - 30 bar Druckanstieg

Sehr schlecht > 31 bar Druckanstieg

**Beispiele**

Die gebrauchten silikonisierten Polyesterfolien wurden bei verschiedenen Abfüllbetrieben (Getränke/Detergentien) nach der Nutzung sortenrein gesammelt.

Die Säcke mit den Linern wurden auf einem Förderband ausgeleert und Fremdmaterial manuell entfernt. Sichtbare Label wurden soweit möglich ebenfalls entfernt. Die Folie wurde anschließend gehäckselt und alle 2 Stunden eine 1 kg Probe des Häcksels auf die verbliebene Menge an Labelmaterial untersucht (Labelmaterial wurde abgetrennt und gewogen). An diesen Proben wurde zudem die mittlere Silikonschichtdicke bestimmt (die Schichtdicke wurde mittels Ellipsometrie an 50 Flakes gemessen und gemittelt). Die in der Tabelle angegebenen Werte stellen einen Mittelwert von 4 solchen Proben dar. Für die Vergleichsbeispiele mit erhöhtem Restlabelgehalt wurde auf die Entfernung der Labels verzichtet.

Die Häcksel wurden anschließend in jeweils in einem Zweischneckenextruder der Firma Japan Steel Works aufgeschmolzen und das gleich aufgearbeitete Häcksel zum Vergleich in einem Einschneckenextruder der Firma Erema aufgeschmolzen. Das Häcksel für Vergleichsbeispiel 6 wurde in einem Einschneckenextruder der Firma NGR mit angeschlossener Flüssigphasenaufkondensation mit Mehrschneckenaustragswerk aufgeschmolzen. Anschließend wurde über einen 30 μm Metallvliesfilter filtriert und dann granuliert.

Das so erhaltene post consumer Regenerat wurde dann wie in der Tabelle angeben mit den anderen Polymeren gemischt und bei 292°C aufgeschmolzen, über einen 20 μm (Porenvolumen) Metallvliesfilter filtriert und durch eine Breitschlitzdüse auf eine auf 50°C temperierte Kühlwalze elektrostatisch angelegt. Anschließend wird sie bei folgenden Bedingungen längs- und dann quergestreckt:

| Längsstreckung | Aufheiztemperatur | 75-115 | °C |
|---|---|---|---|
| | Strecktemperatur | 115 | °C |
| | Längsstreckverhältnis | 3,8 | |
| Querstreckung | Aufheiztemperatur | 100 | °C |
| | Strecktemperatur | 112 | °C |
| | Querstreckverhältnis (inklusive Streckung 1.Fixierfeld) | 3,8 | |
| Fixierung | Temperatur | 237 - 150 | °C |
| | Dauer | 3 | S |
| Fixierung | Temperatur 1. Fixierfeld | 170 | °C |

Vor der Querstreckung erfolgte eine Silikonbeschichtung wie in Beispiel 7 aus US5672428. Die Dicke der Siliconschicht auf der fertigen fixierten Folie betrug 110 - 125 nm.

In den Beispielen kommen die folgenden Rohstoffe zum Einsatz:

PET1 = Polyethylenterephthalatrohstoff aus Ethylenglykol und Terephthalsäure mit einem SV Wert von 820 (Isophthalsäuregehalt < 0,1 Gew.-%, DEG 1 Gew.-%).

PET2 = Polyethylenterephthalatrohstoff aus Ethylenglykol und Terephthalsäure mit einem SV Wert von 790 (Isophthalsäuregehalt < 0,1 Gew.-%, DEG 1,1 Gew.-%). Mit 1 Gew.-% Sylysia 320 der Firma Fuji Sylysia Japan

PET3 = Polyethylenterephthalatrohstoff aus Ethylenglykol und Terephthalsäure mit einem SV Wert von 1020 (Isophthalsäuregehalt < 0,1 Gew.-%, DEG 1 Gew.-%).

In der Folienherstellung ist maximal 1 Abriss alle 8 h akzeptabel, alles andere ist unwirtschaftlich. Steigt der Druck im Filter der Basisschicht B stärker an als normal (bei Produktion ohne post consumer Rezyklat beträgt die Filterstandzeit üblicherweise > 14 Tage), sinkt die Wirtschaftlichkeit, da der Filter schneller die Druckgrenze erreicht und gewechselt werden muss. Ein starker Druckanstieg kann dazu führen, dass die Druckgrenze beispielsweise innerhalb weniger als 2 Tage erreicht wird, dies ist klar unwirtschaftlich. Eine deutliche Eintrübung der Folie ist in der Zielanwendung unerwünscht. Eine deutlich wahrnehmbare Geruchsentwicklung ist unerwünscht.

Der Ausdruck "starker Druckanstieg" ist so zu verstehen, dass der Druck schneller ansteigt als normal und der Maximaldruck innerhalb einer kürzeren Zeit erreicht wird.

Die nachfolgenden Tabellen 1 (Tabelle zu den hergestellten Regeneraten) und 2 (Tabelle zu den Hergestellten Folien unter Verwendung der in Tabelle 1 enthaltenen Regenerate) fassen die Rezepturen, und resultierenden Rohstoff- und Folieneigenschaften zusammen:

| | | RG1 | RG2 | RG3 | RG4 | RG5 | RG6 | RG7 | RG8 | RG9 | RG10 | RG11 |
|---|---|---|---|---|---|---|---|---|---|---|---|---|
| Beispiel | | 1 | VB1 | VB2 | 2 | 3 | VB3 | VB4 | 4 | VB5 | VB6 | VB7 |
| Extruder | Einschneckenextruder | | x | | | | x | | | x | | |
| | Doppelschneckenextruder | x | | x | x | x | x | x | x | | | x |
| | Einschneckenextruder mit angeschlossener Flüssigphasenaufkondensation mit Mehrschneckenaustragswerk | | | | | | | | | | x | |
| Verunreinigungen aus Restmengen an Labels | Papiergehalt in Gew.% | 0 | 0 | 0 | 0 | 0,01 | 0,01 | 1,1 | 0 | 0 | 0 | 0 |
| | Polypropylengehalt in Gew.% | 0,013 | 0,012 | 2,5 | 0,2 | 0 | 0 | 0 | 0 | 0 | 0,012 | 0,014 |
| | Polyesterbasierte Labels in Gew.% | 0 | 0 | 0 | 0 | 0 | 0 | 0 | 4 | 4 | 0 | 0 |
| | Sonstige Polymere in Gew.% | 0 | 0 | 0 | 0 | 0 | 0 | 0 | 0 | 0 | 0 | 0 |
| Sonstiges | Mittlere Dicke der Silikonschicht in nm | 121 | 119 | 122 | 117 | 119 | 121 | 118 | 117 | 123 | 119 | 605 |
| | Standzeit des Filters in der Regeneratherstellung in Stunden | 24 | 20 | 20 | 21 | 20 | 18 | 2 | 22 | 20 | 20 | 20 |
| | Filtertestergebis | sehr gut | schlecht | gut | gut | gut | schlecht | sehr schlecht | sehr gut | schlecht | akzeptabel | akzeptabel |
| | SV-Wert Granulat | 620 | 610 | 600 | 610 | 619 | 608 | 595 | 609 | 597 | 750 | 610 |
| | Geruchsentwicklung | keine | keine | sehr stark | merkbar | keine | keine | roch verbrannt | merkbar | merkbar | keine | keine |
| Kommentar | | | | Granulat war trüb | | | | Schwarze Einschlüsse im Granulat | Granulat leicht grau | Granulat leicht grau | | |

**Tabelle 1**

| Beispiel | | FB1 | FB2 | FB3 | VFB1 | VFB2 | VFB3 | VFB4 | VFB5 | VFB6 |
|---|---|---|---|---|---|---|---|---|---|---|
| | Rohstoff | | | | | | | | | |
| Schicht A/A' jeweils 2 µm dick | PET 1 | 94 | 94 | 94 | 94 | 94 | 94 | 94 | 94 | 94 |
| | PET 2 | 6 | 6 | 6 | 6 | 6 | 6 | 6 | 6 | 6 |
| Mittelschicht B 19 µm dick | PET 1 | 40 | 40 | 40 | 38 | 36 | 90 | 40 | 40 | 40 |
| | PET 2 | 0 | 0 | 0 | 0 | 0 | 0 | 0 | 0 | 0 |
| | PET 3 | 20 | 20 | 20 | 22 | 24 | 5 | 20 | 20 | 20 |
| | RG1 | 40 | | | | | | | | |
| | RG2 | | | | 40 | | 5 | | | |
| | RG3 | | | | | 40 | | | | |
| | RG4 | | | | | | | | | |
| | RG5 | | | 40 | | | | | | |
| | RG6 | | | | | | | 40 | | |
| | RG7 | | | | | | | | | |
| | RG8 | | 40 | | | | | | | |
| | RG9 | | | | | | | | | |
| | RG10 | | | | | | | | 40 | 0 |
| | RG11 | 0 | 0 | 0 | 0 | 0 | 0 | 0 | 0 | 40 |
| Sonstiges | Mittlere Dicke der Silikonschicht in nm | 100 | 100 | 100 | 100 | 100 | 100 | 100 | 100 | 100 |
| | Druckanstieg Filter Schicht B | normal | normal | normal | stark | leicht höher als normal | leicht höher als normal | stark | höher als normal | leicht höher als normal |
| | Folienabrisse in 8 h | keine | keine | keine | 3 | 1 | 1 | 2 | 2 | 2 |
| | Geruchsentwicklung | keine | keine | keine | keine | stark | keine | keine | keine | keine |
| Emodul MD/TD in N/mm2 | | 4150/4900 | 4050/5000 | 4270/4870 | 4100/4790 | 4230/4990 | 4150/4806 | 4210/4870 | 4120/4910 | 4080/5050 |
| Kommentar | | | Stirnseite Rolle leicht grau | | | Folie deutlich trüb | schon bei der niedrigen Dosierung Druckanstieg bemerkbar | | | |

**Tabelle 2**

**Patentansprüche**

1. Verfahren zur Rezyklierung einer Polyesterfolie, umfassend

(a) Zerkleinern einer gebrauchten Polyesterfolie zu Häckseln, wobei die gebrauchte Polyesterfolie ein Polyethylenterephthalatpolymer und eine Silikonbeschichtung umfasst, wobei die Schichtdicke der Silikonbeschichtung kleiner 0,5 µm ist,
(b) Aufschmelzen der Häcksel in einem Zwei- oder Mehrschneckenextruder,
(c) Filtrieren der Schmelze,
(d) Granulieren.

2. Verfahren nach Anspruch 1, **dadurch gekennzeichnet, dass** die Häcksel in (b) in einem Zweischneckenextruder aufgeschmolzen werden.

3. Verfahren nach Anspruch 1, **dadurch gekennzeichnet, dass** die Schichtdicke der Silikonbeschichtung kleiner 250 nm, besonders bevorzugt kleiner 180 nm ist.

4. Verfahren nach einem oder mehreren der Ansprüche 1 bis 3, **dadurch gekennzeichnet, dass** in (c) Metallgewebefilter oder Sintermetallfilter verwendet werden.

5. Verfahren nach einem oder mehreren der Ansprüche 1 bis 4, **dadurch gekennzeichnet, dass** die Nenn-Porenweite der letzten Filtrationsstufe $\leq 100$ µm, bevorzugt $\leq 80$ µm, besonders bevorzugt $\leq 30$ µm ist.

6. Verfahren zur Herstellung einer biaxial orientierten Polyesterfolie, umfassend:

(a) Zerkleinern einer gebrauchten Polyesterfolie zu Häckseln, wobei die gebrauchte Polyesterfolie ein Polyethylenterephthalatpolymer und eine Silikonbeschichtung mit einer Schichtdicke kleiner 0,5 µm umfasst, Aufschmelzen der Häcksel in einem Zwei- oder Mehrschneckenextruder, Filtrieren der Schmelze und Granulieren.
(b) Aufschmelzen von PET- Granulat in einem Extruder, wobei mindestens 10 Gew.-% des PET-Granulats ein Granulat ist, das nach dem Schritt (a) erhalten wurde,
(c) Extrudieren der entstandenen Schmelze durch eine Breitschlitzdüse,
(d) Abkühlen auf einer Kühlwalze und Verfestigen zu einer Folie,
(e) biaxiales Strecken der Folie.

7. Verfahren nach Anspruch 6, **dadurch gekennzeichnet, dass** mindestens 25 Gew.-%, bevorzugt mindestens 31 Gew.-% des Granulats nach einem Verfahren gemäß Anspruch 1 erhalten wurden.

8. Verfahren nach Anspruch 6 oder 7, **dadurch gekennzeichnet, dass** der mittlere SV-Wert des PET-Granulats > 700, bevorzugt > 750 beträgt.

9. Verfahren nach einem oder mehreren der Ansprüche 6 bis 8, **dadurch gekennzeichnet, dass** die biaxiale Streckung in (d) sequenziell durchgeführt wird.

**Claims**

1. Process for recycling a polyester film, comprising

(a) comminuting a used polyester film to shreds, the used polyester film comprising a polyethylene terephthalate polymer and a silicone coating, the layer thickness of the silicone coating being less than 0.5 µm,
(b) melting the shreds in a twin-screw or multi-screw extruder,
(c) filtering the melt,
(d) pelletizing.

2. Process according to Claim 1, **characterized in that** the shreds in (b) are melted in a twin-screw extruder.

3. Process according to Claim 1, **characterized in that** the layer thickness of the silicone coating is less than 250 nm, more preferably less than 180 nm.

4. Process according to one or more of Claims 1 to 3, **characterized in that** in (c) metal-fabric filters or sintered-metal filters are used.

5. Process according to one or more of Claims 1 to 4, **characterized in that** the nominal pore size of the final filtration stage is ≤ 100 μm, preferably ≤ 80 μm, more preferably ≤ 30 μm.

6. Process for producing a biaxially oriented polyester film, comprising:

(a) comminuting a used polyester film to shreds, the used polyester film comprising a polyethylene terephthalate polymer and a silicone coating having a layer thickness of less than 0.5 μm, melting the shreds in a twin-screw or multi-screw extruder, filtering the melt and pelletizing,
(b) melting PET pellets in an extruder, at least 10% by weight of the PET pellets being pellets obtained according to step (a),
(c) extruding the resulting melt through a flat-film die,
(d) cooling on a chill roll and solidifying to a film,
(e) biaxially stretching the film.

7. Process according to Claim 6, **characterized in that** at least 25% by weight, preferably at least 31% by weight, of the pellets have been obtained by a process according to Claim 1.

8. Process according to Claim 6 or 7, **characterized in that** the mean SV of the PET pellets is > 700, preferably > 750.

9. Process according to one or more of Claims 6 to 8, **characterized in that** the biaxial stretching in (d) is carried out sequentially.

**Revendications**

1. Procédé de recyclage d'un film de polyester, comprenant

(a) le broyage d'un film de polyester usagé en flocons, le film de polyester usagé comprenant un polymère de polyéthylène téréphtalate et un revêtement de silicone, l'épaisseur de couche du revêtement de silicone étant inférieure à 0,5 μm,
(b) la fusion des flocons dans une extrudeuse à deux ou plusieurs vis,
(c) la filtration de la masse fondue,
(d) la granulation.

2. Procédé selon la revendication 1, **caractérisé en ce que** les flocons sont fondus en (b) dans une extrudeuse à deux vis.

3. Procédé selon la revendication 1, **caractérisé en ce que** l'épaisseur de couche du revêtement de silicone est inférieure à 250 nm, de manière particulièrement préférée inférieure à 180 nm.

4. Procédé selon une ou plusieurs des revendications 1 à 3, **caractérisé en ce que** des filtres en tissu métallique ou des filtres en métal fritté sont utilisés en (c).

5. Procédé selon une ou plusieurs des revendications 1 à 4, **caractérisé en ce que** la taille de pore nominale du dernier étage de filtration est ≤ 100 μm, de préférence ≤ 80 μm, de manière particulièrement préférée ≤ 30 μm.

6. Procédé de fabrication d'un film de polyester bi-orienté, comprenant :

(a) le broyage d'un film de polyester usagé en flocons, le film de polyester usagé comprenant un polymère de polyéthylène téréphtalate et un revêtement de silicone d'une épaisseur de couche inférieure à 0,5 μm, la fusion des flocons dans une extrudeuse à deux ou plusieurs vis, la filtration de la masse fondue et la granulation,
(b) la fusion de granulés de PET dans une extrudeuse, au moins 10 % en poids des granulés de PET étant des granulés obtenus selon l'étape (a),
(c) l'extrusion de la masse fondue ainsi obtenue à travers une filière plate,
(d) le refroidissement sur un cylindre refroidisseur et la solidification en un film,
(e) l'étirage biaxial du film.

7. Procédé selon la revendication 6, **caractérisé en ce qu'**au moins 25 % en poids, de préférence au moins 31 % en poids des granulés ont été obtenus par un procédé selon la revendication 1.

8. Procédé selon la revendication 6 ou 7, **caractérisé en ce que** la valeur SV moyenne des granulés de PET est > 700, de préférence > 750.

9. Procédé selon une ou plusieurs des revendications 6 à 8, **caractérisé en ce que** l'étirage biaxial en (d) est effectué de manière séquentielle.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2524015 A
- US 5672428 A
- EP 3283295 A